# EUROPÄISCHE PATENTANMELDUNG

(11) **EP 1 637 465 A1**
(43) Veröffentlichungstag der Anmeldung: **22.03.2006**
(21) Anmeldenummer: 04022135.0
(22) Anmeldetag: 17.09.2004
(51) Int. Cl.: B65D 23/08, B29C 49/24

(54) **Getränkeflasche**

(71) Anmelder: Oberhofer, Kurt, 69259 Wilhelmsfeld (DE); Oberhofer, Timm, 69259 Wilhelmsfeld (DE)
(72) Erfinder: Oberhofer Kurt, DE-69259 Wilhelmsfeld (DE); Oberhofer Timm, DE-69259 Wilhelmsfeld (DE)
(74) Vertreter: Meyer-Roedern, Giso

(57) **Zusammenfassung**

Die Getränkeflasche hat eine foliendicke Außenschicht aus Aluminium oder einer Aluminiumlegierung und eine tragende Innenschicht aus Kunststoff.

## Beschreibung

Die Erfindung betrifft eine Getränkeflasche.

Getränkeflaschen sind aus verschiedenen Materialien bekannt. Weit verbreitet sind Getränkeflaschen aus Glas. Glas ist gegen praktisch alle äußeren Einflüsse dicht. Ein Recycling von Glasflaschen, sei es durch Wiederverwendung nach gründlicher Reinigung, sei es durch Aufschmelzen, ist problemlos möglich. Gegen den Einsatz von Glasflaschen für Getränke spricht neben einigermaßen hohen Gestehungskosten letztlich nur ihr hohes Gewicht.

Getränkeflaschen aus Glas werden zunehmend durch Kunststoff-Flaschen ersetzt. Deren Herstellung in Kunststoff-Spritzgußtechnik oder Kunststoff-Blasformtechnik ist unaufwendig, und sie haben ein geringes Gewicht. Um eine gute Sperrwirkung gegen die Diffusion von Sauerstoff und Kohlendioxid zu erreichen, bedarf es jedoch des Einsatzes spezieller, vergleichsweise aufwendiger Kunststoffmaterialien wie z. B. Polyethylenterephthalat (PET). Dennoch bleibt bei einer Kunststoff-Flasche die Sperrwirkung gegen die Diffusion von Sauerstoff und Kohlendioxid hinter der einer Glasflasche zurück. Das hat einen nachteiligen Einfluß auf die Haltbarkeit und den Geschmack des Getränks.

Speziell in dem Marktsegment hochwertiger Getränke kommen Aluminiumflaschen zum Einsatz. Deren Gestehungskosten sind wesentlich höher, als die einer Kunststoff-Flasche. Aluminium schirmt sichtbares und ultraviolettes Licht ab, und es hat eine hervorragende Sperrwirkung gegen die Diffusion von Sauerstoff und Kohlendioxid. Elementares Aluminium ist auch uneingeschränkt lebensmitteltauglich. Jedoch ist die Herstellung hundertprozentig reinen Aluminiums technisch nicht möglich. Aluminium enthält immer einen minimalen Anteil Schwermetall, der den direkten Kontakt mit Lebensmitteln problematisch macht. Getränkeflaschen aus Aluminium sind daher üblicherweise innen lackiert. Diese Lackierung ist aufwendig.

Aufgabe der Erfindung ist es, eine Getränkeflasche zu schaffen, die unaufwendig herzustellen ist und die vorteilhaften Eigenschaften einer Aluminium- und Kunststoff-Flasche vereinigt.

Gelöst wird diese Aufgabe durch eine Getränkeflasche mit einer wenigstens einen Teil ihrer äußeren Oberfläche bildenden Schicht aus Aluminium oder einer Aluminiumlegierung, die Foliendicke hat, und einer durchgehend die innere Oberfläche bildenden, tragenden Schicht aus Kunststoff.

Die äußere Schicht aus Aluminium schirmt sichtbares und ultraviolettes Licht ab, und sie gewährleistet eine hervorragende Sperrwirkung gegen die Diffusion von Sauerstoff und Kohlendioxid. Da die Schicht nur foliendick ist, sind die Materialkosten dafür gering. Die äußere Anmutung der Flasche ist die einer hochwertigen Aluminiumflasche.

Die tragende Schicht aus Kunststoff kann in unaufwendiger Weise durch Spritzgießen oder Blasformen hergestellt werden. Da eine gute Sperrwirkung gegen die Diffusion von Sauerstoff und Kohlendioxid durch die Aluminiumschicht gewährleistet ist, kommt man mit vergleichsweise unaufwendigem Kunststoffmaterial aus. Die Kunststoffschicht verhindert den direkten Kontakt des Getränks mit dem Aluminium.

Ein bevorzugtes Verfahren zur Herstellung der Getränkeflasche besteht darin, daß eine mit Aluminium oder einer Aluminiumlegierung beschichtete Kunststoff-Folie in ein der Getränkeflaschenherstellung dienendes Formwerkzeug der Kunststoff-Formtechnik eingelegt, das Formwerkzeug mit in verformbarem, siegelfähigen Zustand befindlichem Kunststoff beschickt und nach Erhärten des Kunststoffs die mit der angesiegelten Folie versehene Flasche aus dem Formwerkzeug entnommen wird.

Bei einer bevorzugten Ausführungsform besteht die Folie aus Polypropylen (PP).

Bei einer bevorzugten Ausführungsform wird die Folie vollflächig und sich am Stoß überlappend in das Formwerkzeug eingelegt.

Das Verfahren kann sowohl mit einem Formwerkzeug der Kunststoff-Spritzgußtechnik, als auch mit einem Formwerkzeug der Kunststoff-Blasformtechnik durchgeführt werden. Der verwendete Kunststoff braucht keine überlegende Sperrwirkung gegen die Diffusion von Sauerstoff und/oder Kohlendioxid zu haben. Es kann sich um den gleichen Kunststoff handeln, aus dem auch die mit Aluminium beschichtete Kunststoff-Folie besteht, beispielsweise Polypropylen (PP).

### Beispiel

In ein Formwerkzeug der Kunststoff-Spritzgußtechnik oder Kunststoff-Blasformtechnik, das herkömmlicherweise zur Herstellung einer Getränkeflasche aus Polyethylenterephthalat (PET) dient, wird ein Zuschnitt Folie eingelegt. Die Folie ist eine mit Aluminium beschichtete Polypropylenfolie. Der Zuschnitt wird vollflächig und mit Überlappung am Stoß so in das Formwerkzeug eingelegt, daß die Aluminiumschicht nach außen weist. Das Formwerkzeug wird mit heißem, flüssigen Polypropylen ausgespritzt oder ausgeblasen und nach Erhärten des Kunststoffs die fertige Flasche entnommen. Die Flasche hat eine angesiegelte vollflächige Außenschicht aus foliendickem Aluminium.

## Patentansprüche

1. Getränkeflasche mit einer wenigstens einen Teil ihrer äußeren Oberfläche bildenden Schicht aus Aluminium oder einer Aluminiumlegierung, die Foliendicke hat, und einer durchgehend die innere Oberfläche bildenden, tragenden Schicht aus Kunststoff.

2. Verfahren zur Herstellung einer Getränkeflasche nach Anspruch 1,
**dadurch gekennzeichnet, daß** eine mit Aluminium oder einer Aluminiumlegierung beschichtete Kunststoff-Folie in ein der Getränkeflaschenherstellung dienendes Formwerkzeug der Kunststoff-Formtechnik eingelegt, das Formwerkzeug mit in verformbarem, siegelfähigen Zustand befindlichem Kunststoff beschickt und nach Erhärten des Kunststoffs die mit der angesiegelten Folie versehene Flasche aus dem Formwerkzeug entnommen wird.

3. Verfahren nach Anspruch 2, **dadurch gekennzeichnet, daß** eine Kunststoff-Folie aus Polypropylen (PP) verwendet wird.

4. Verfahren nach Anspruch 2 oder 3, **dadurch gekennzeichnet, daß** die Folie vollflächig und sich am Stoß überlappend in das Formwerkzeug eingelegt wird.

5. Verfahren nach einem der Ansprüche 2 bis 4, **dadurch gekennzeichnet, daß** es mit einem Formwerkzeug der Kunststoff-Spritzgußtechnik durchgeführt wird.

6. Verfahren nach einem der Ansprüche 2 bis 4, **dadurch gekennzeichnet, daß** es mit einem Formwerkzeug der Kunststoff-Blasformtechnik durchgeführt wird.

7. Getränkeflasche oder Verfahren nach einem der Ansprüche 1 bis 6, **gekennzeichnet durch** einen Kunststoff, der keine überlegene Sperrwirkung gegen die Diffusion von Sauerstoff und/oder Kohlendioxid hat.

8. Getränkeflasche oder Verfahren nach Anspruch 7, **dadurch gekennzeichnet, daß** der Kunststoff mit dem der Kunststoff-Folie materialgleich ist.

9. Getränkeflasche oder Verfahren nach Anspruch 7 oder 8, **dadurch gekennzeichnet, daß** der Kunststoff Polypropylen (PP) ist.
